(19) Europäisches Patentamt / European Patent Office / Office européen des brevets

(11) **EP 2 179 273 B1**

(12) **EUROPÄISCHE PATENTSCHRIFT**

(45) Veröffentlichungstag und Bekanntmachung des Hinweises auf die Patenterteilung:
**19.12.2012 Patentblatt 2012/51**

(21) Anmeldenummer: **08851966.5**

(22) Anmeldetag: **19.11.2008**

(51) Int Cl.:
*G01N 22/00* *(2006.01)*      *G01N 22/04* *(2006.01)*

(86) Internationale Anmeldenummer:
**PCT/EP2008/009775**

(87) Internationale Veröffentlichungsnummer:
**WO 2009/065568 (28.05.2009 Gazette 2009/22)**

(54) **VERFAHREN UND VORRICHTUNG ZUR FEUCHTE- UND/ODER DICHTEMESSUNG**

METHOD AND DEVICE FOR HUMIDITY AND/OR DENSITY MEASUREMENT

PROCÉDÉ ET DISPOSITIF DE MESURE D'HUMIDITÉ ET/OU DE DENSITÉ

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **20.11.2007 DE 102007057092**

(43) Veröffentlichungstag der Anmeldung:
**28.04.2010 Patentblatt 2010/17**

(73) Patentinhaber: **Tews Elektronik Gmbh&co. Kg 22459 Hamburg (DE)**

(72) Erfinder: **RICHTER, Hendrik 20255 Hamburg (DE)**

(74) Vertreter: **Hauck Patent- und Rechtsanwälte Neuer Wall 50 20354 Hamburg (DE)**

(56) Entgegenhaltungen:
**EP-A- 0 935 136     WO-A- 00/09983**

• ELKHETALI S I ET AL: "Estimation of Electromagnetic of Libyan soil Properties by Stepped Frequency Radar" ADVANCED GROUND PENETRATING RADAR, 2007 4TH INTERNATIONAL WORKSHOP ON, IEEE, PI, 1. Juni 2007 (2007-06-01), Seiten 110-113, XP031119649 ISBN: 978-1-4244-0886-3
• LAMBOT S ET AL: "Modeling of Ground-Penetrating Radar for Accurate Characterization of Subsurface Electric Properties" IEEE TRANSACTIONS ON GEOSCIENCE AND REMOTE SENSING, IEEE SERVICE CENTER, PISCATAWAY, NJ, US, Bd. 42, Nr. 11, 1. November 2004 (2004-11-01), Seiten 2555-2568, XP011121984 ISSN: 0196-2892
• SÉBASTIEN LAMBOT ET AL: "Frequency Dependence of the Soil Electromagnetic Properties Derived from Ground-Penetrating Radar Signal Inversion" SUBSURFACE SENSING TECHNOLOGIES AND APPLICATIONS ; AN INTERNATIONAL JOURNAL, KLUWER ACADEMIC PUBLISHERS-PLENUM PUBLISHERS, NE, Bd. 6, Nr. 1, 1. Januar 2005 (2005-01-01), Seiten 73-87, XP019291651 ISSN: 1573-9317
• LYTLE V I ET AL: "Dielectric permittive and scattering measurements" IEEE TRANSACTIONS ON GEOSCIENCE AND REMOTE SENSING 1994 MAR IEEE, Bd. 32, Nr. 2, März 1994 (1994-03), Seiten 290-295, XP002526227

**Beschreibung**

Die vorliegende Erfindung betrifft ein Verfahren und eine Vorrichtung zur Feuchte- und/oder Dichtemessung an einem Messgut unter Verwendung der Mikrowellentechnik. Die Erfindung betrifft insbesondere die berührungslose Messung eines dichte- und Messgutdickeunabhängigen Feuchtewerts und/oder eines feuchteunabhängigen Wertes der Flächendichte, der bei Kenntnis der Dicke in eine Dichte umgewandelt werden kann. Die Messung erfolgt an dielektrischen Materialen durch Transmission elektromagnetischer Strahlung durch das Messgut. Die vorliegende Erfindung ist für alle Arten von Messgütern anwendbar, insbesondere bei der Feuchtemessung von Großballen und Kartons gefüllt beispielsweise mit Tee, Tabak, Baumwolle, Textilien, Zellstoffen, organischen Materialien und dergleichen, ebenso für plattenförmige Messgüter wie beispielsweise Holzplatten, Pressspanplatten, MDF-Platten, Baustoffe, Gips, Styropor, Kunststoffe und dergleichen. Die Erfindung ist ferner geeignet, um bei stehenden oder bewegten Gütern eingesetzt zu werden, wie beispielsweise bei Getreide, Cerealien, Trockenobst und Gemüse, Granulaten und dergleichen.

Aus DE 40 04 119 C2 ist beispielsweise bekannt, dass die Feuchtemessung an dielektrischen Stoffen mit elektromagnetischen Wellen möglich ist. Eine solche Messung beruht auf der Tatsache, dass Wasser eine große komplexe Brechzahl n-ik besitzt, so dass die dielektrischen Eigenschaften des feuchten Messguts maßgeblich von den dielektrischen Eigenschaften des enthaltenen Wassers bestimmt werden. Neben der Tatsache, dass Wasser eine große komplexe Brechzahl besitzt, ist für die Auswertung der Messung wichtig, dass die komplexe Brechzahl proportional zur Dichte des Messguts ist. Elektromagnetische Wellen, die mit dem Messgut in Wechselwirkung treten, erfahren in dem Messgut sowohl eine Dämpfung als auch eine Wellenlängenverkürzung. Die Dämpfung der elektromagnetischen Wellen ist umso größer, je höher der Imaginärteil k der komplexen Brechzahl des Materials ist. Die Wellenlängenverkürzung der elektromagnetischen Welle ist umso stärker ausgeprägt, je höher der Realteil n der komplexen Brechzahl des Materials ist. Beide Effekte sind daher umso größer, je höher die Feuchte und die Dichte des Materials sind.

Die Messung der komplexen Brechzahl eines Messguts gelingt besonders gut mit Mikrowellenresonatoren, vergleiche beispielsweise DE 40 04 119 C2. Hier werden die Änderung der Resonanzbreite und die Verschiebung der Resonanzfrequenz des befüllten Resonators gegenüber dem unbefüllten Resonator erfasst und so Kenngrößen für den Imaginärteil und Realteil der komplexen Brechzahl bzw. der komplexen Dielektrizitätskonstanten des Messguts bestimmt. Aus den Kenngrößen werden dann ein dichteunabhängiger Feuchtewert und/oder ein feuchteunabhängiger Dichtewert für das Messgut unter Verwendung von weiteren spezifischen Parametern ermittelt. Da das elektromagnetische Feld an den Resonator gebunden ist und nur bis zu einer geringen Tiefe von ca. einer halben Wellenlänge in das Messgut eindringt, unterliegen Resonatorverfahren bei ausgedehnten Messgütern und insbesondere bei Verwendung von Streufeldsensoren grundsätzlich der technischen Begrenzung, Feuchte und Dichte nur an der Oberfläche erfassen zu können, nicht aber im Kern des Messguts. Zudem muss der Resonator stets in unmittelbare Nähe des Messguts gebracht werden, meist mit diesem sogar in Berührung stehen.

Bei vielen Anwendungen ist die Erfassung der Feuchte und/oder der Dichte im Kern von ausgedehnten Messgütern, wie beispielsweise in großen Kartons oder Ballen, erforderlich. In der Mikrowellentechnik werden hierzu Transmissionsmessungen eingesetzt, bei denen das Messgut mit Mikrowellenstrahlung durchstrahlt wird.

Aus US 4,727,311 ist ein Transmissionsmessverfahren bekannt, bei dem unter Einsatz von Mikrowellen der Feuchtegehalt in dem Messgut bestimmt wird. Hierzu werden zwei Mikrowelleneingangssignale mit unterschiedlicher Frequenz verwendet und jeweils deren Dämpfung gemessen. Aus der Dämpfung wird die Feuchtigkeit bestimmt. Um die Dichte des Messguts zu bestimmen, wird die Phasenverschiebung der Mikrowellensignale in dem Messgut erfasst.

Aus US 5,333,493 sind eine Vorrichtung und ein Verfahren zur Bestimmung des Feuchtegehalts in einer Probe bekannt, die auf einem Förderband durch eine Messanordnung transportiert wird. Zur Messung wird eine Reihe von Mikrowellensignalen mit diskreten Frequenzen eingesetzt. Die Phasenverschiebung der empfangenen Signale wird gemittelt und mit einem durch Wiegen bestimmten Gewicht des Messguts gemeinsam zur Bestimmung der Feuchte ausgewertet.

Aus US 6,025,724 sind eine Vorrichtung und ein Verfahren zur Bestimmung des Feuchtegehalts in verpackten Gütern bekannt. Hierbei werden die Phasenverschiebung und die Dämpfung der empfangenen Mikrowellen mehrfach gemessen, wobei die Mikrowellen in verschiedenen Bereichen durch das Messgut treten. Unter Hinzunahme einer weiteren Kenngröße für das Messgut wird aus den gemessenen Werten für die Dämpfung ein Rohwert für eine korrigierte Dämpfung bestimmt, der dann zur Bestimmung der Feuchte dient.

Aus US 2004/023338 A1 sind ein Verfahren und eine Vorrichtung zur Messung der Feuchtigkeit und/oder des Salzgehaltes in einem Messgut bekannt. Hierbei wird das Messgut mit polarisierter Mikrowellenstrahlung durchstrahlt und die reflektierte Strahlung analysiert. Aus der Dämpfung der reflektierten Strahlung wird dann die Feuchte bestimmt.

Aus US 2005/0253595 AI ist eine Vorrichtung und ein Verfahren zur Bestimmung der Feuchte bekannt, bei dem die Phasenverschiebung und die Dämpfung der transmittierten Strahlung analysiert werden. Ferner wird die Dicke der Probe separat gemessen, um die Feuchte der Probe zu analysieren.

Aus einem Artikel von O. Schimmer et al., "Noncontacting determination of moisture content in bulk materials using sub-nanosecond UWB-pulses", Microwave Theory and Techniques, IEEE Transactions, Juni 2005 ist ein Verfahren bekannt, bei dem ein kurzer quasi-gaussscher Puls elektromagnetische Wellen erzeugt und über eine Sendeantenne ausgestrahlt wird, welcher dann das Messgut durchdringt und von einer Empfangsantenne wieder aufgenommen wird. Mit Hilfe multivariater Kalibration, Hauptkomponentenregression (PCR) oder eines künstlichen neuronalen Netzwerks wird die Form des transmittierten Impulses mit der Form des transmittierten Pulses ohne Messgut verglichen. Bei dieser Technik lassen sich mindestens zwei Messgrößen gewinnen, welche zur dichteunabhängigen Feuchtemessung herangezogen werden können.

Aus US 4,319,185 ist ein Verfahren bekannt, bei dem ein elektromagnetischer Puls ausgesendet wird, dessen Höhe nach Transmission durch das Messgut, als Kenngröße für die Feuchte herangezogen wird. Bei diesem Verfahren wird ausschließlich die Dämpfung erfasst, so dass eine zusätzliche Dichtemessung notwendig ist, um einen dichteunabhängigen Feuchtewert bestimmen zu können.

Aus S.I. Elkhetali et al.: "Estimation of Electromagnetic of Libyan soil Properties by Stepped Frequency Radar", veröffentlicht in Advanced Ground Penetrating Radar, 2007, Fourth International Workshop on IEEEPE, 1. Juni 2007, Seiten 110 - 113 ist bekannt geworden, Mikrowellensignale im Frequenzbereich von 1 - 3 GHz durch ein Messgut mit einer definierten Dicke D treten zu lassen. Die transmittierten Mikrowellensignale werden an einem Reflektor reflektiert, wobei die reflektierte Strahlung aufgezeichnet wird. Es erfolgt eine Messung der Dämpfung und der Phasenverschiebung der reflektierten Mikrowellensignale. Der Vorgang wird anschließend für eine Messprobe der Dicke D + $\Delta$ Z wiederholt. Nachfolgend erfolgt eine Transformation der gewonnenen Messwerte in dem Zeitbereich durch eine inverse Fourier-Transformation aus der eine Zeitverzögerung jeweils ermittelt wird. Aus der Differenz der Zeitverzögerung wird ein dichteabhängiger Feuchtewert bestimmt.

Aus Jürgen Sachs: "Principles of Ultra-Wideband Sensor Electronics", erschienen in Electromagnetic Aquametry: Electromagnetic Wave Interaction with Water and Moist Substance, herausgegeben von Klaus Kupfer, Springer-Verlag, Berlin 2004 ist es bekannt, aus einem Messsignal $y_m$ (t) ein zugehöriges Stimulussignal $x_m$(t) zu entfalten. Hierzu wird folgender Ansatz vorgeschlagen:

$$h(t) = \text{IFT} \left\{ \frac{FT\{y_m\}}{FT\{x_m\}} \right\},$$

wobei FT { } die Fourier-Transformation und IFT { } die inverse Fourier-Transformtion bezeichnet.

Aus E. Nyfors et al.: "Industrial Microwave Sensors", erschienen bei ARTECH HOUSE INC. ist es bekannt, das Verhältnis von Dämpfung und Phasenverschiebung einer transmittierten Welle zu betrachten, um eine Aussage über die Dielektrizitätskonstante machen zu können.

Der Erfindung liegt die Aufgabe zugrunde, ein Verfahren und eine Vorrichtung zur Feuchte und/oder Dichtemessung in einem Messgut bereitzustellen, bei dem mit möglichst einfachen Mitteln für unterschiedlichste Messgüter in verschiedenen räumlichen Positionen in Bezug auf die Messanordnung genaue Werte für die Feuchte und/oder die Dichte bestimmt werden können.

Erfindungsgemäß wird die Aufgabe mit einem Verfahren gemäß Anspruch 1 und durch eine Vorrichtung mit den Merkmalen nach Anspruch 11 gelöst.

Das erfindungsgemäße Verfahren dient zur Feuchte- und/oder Dichtemessung in einem Messgut mittels eines Mikrowellensenders und eines Mikrowellenempfängers. Ferner ist eine Auswerteeinheit vorgesehen, die für von dem Mikrowellenempfänger empfangene Strahlung des Mikrowellensenders die Phase und die Amplitude bestimmen kann und in der eine komplexwertige Übertragungsfunktion der Messanordnung gespeichert werden kann. Die komplexwertige Übertragungsfunktion der Messanordnung gibt an, wie sich eine elektromagnetische Welle bei Durchgang durch die Messanordnung in Abhängigkeit von der Frequenz in ihrer Phase und in ihrer Amplitude ändert, wenn kein Messgut zwischen Mikrowellensender und Mikrowellenempfänger vorhanden ist. Bei dem erfindungsgemäßen Verfahren werden in einem Messvorgang für eine Anzahl von Frequenzen die Phase und die Amplitude der durch das Messgut transmittierten Mikrowellenstrahlung bestimmt, die Werte bilden die komplexwertige Übertragungsfunktion des Messguts. Aus den bestimmten Werten wird unter Verwendung der komplexwertigen Übertragungsfunktion der Messanordnung die komplexwertige Transmissionsfunktion des Messguts berechnet. Die Transmissionsfunktion des Messguts ist eine Übertragungsfunktion für das Messgut, die beschreibt, wie sich die elektromagnetische Welle bei Durchgang durch das Messgut in ihrer Phase und in ihrer Amplitude verändert. Die komplexwertige Transmissionsfunktion des Messguts wird in den Zeitbereich in eine komplexwertige Zeitbereichsfunktion transformiert. Aus der Zeitbereichsfunktion wird der Zeitpunkt, in dem der Hauptpuls seinen Maximalwert hat, als Kenngröße A bestimmt. Ferner wird aus der Zeitbereichsfunktion die Breite, bevorzugt die Halbwertsbreite, des Hauptpulses der komplexwertigen Zeitbereichsfunktion als Kenngröße B und/oder der maximale Amplitudenwert des Hauptpulses als Kenngröße H bestimmt. Die Feuchte und/oder die Dichte des Messguts wird aus der Kenngröße A und aus den Kenngrößen B und/oder H bestimmt. Als Hauptpuls wird der Puls im Zeitbereich angesehen, der den größten Amplitudenwert und/oder die größte Energie besitzt.

Im Gegensatz zu bekannten Transmissionsmessverfahren arbeitet das erfindungsgemäße Verfahren bei der Auswertung der Messsignale mit einer Darstellung der Messergebnisse sowohl im Frequenzbereich als auch im Zeitbereich. Frequenzbereichsdarstellungen und Zeitbereichsdarstellungen sind durch die Fourier-Transformation in einander überführbare, komplementäre Darstellungen von Funktionen. Das erfindungsgemäße Verfahren arbeitet zunächst im Frequenzbereich, wo unter Verwendung der Übertragungsfunktion der Messanordnung und einer für eine Reihe von vorzugsweise diskreten Frequenzen aufgenommene Übertragungsfunktion des Messguts die komplexwertige Transmissionsfunktion des Messguts berechnet wird. Hierbei wird ausgenutzt, dass bei der Messung der durch das Messgut transmittierten Mikrowellenstrahlung in der Messanordnung die Veränderung in der Amplitude und in der Phase sich im Frequenzbereich als ein Produkt der Übertragungsfunktion der Messanordnung und der Transmissionsfunktion des Messguts darstellen lassen. Die Transmissionsfunktion des Messguts beschreibt die Veränderung der elektromagnetischen Strahlung durch das Messgut, wobei die Einflüsse durch die Messanordnung, wie beispielsweise Abstrahlungscharakteristiken und Empfangscharakteristiken von Mikrowellensender bzw. Mikrowellenempfänger bereits herausgerechnet sind. Die so gewonnene Transmissionsfunktion des Messguts beinhaltet aber noch die Einflüsse von Mikrowellenstrahlung, die an Grenzflächen des Messgutes reflektiert wurde und mit der transmittierten oder einfallenden Strahlung interferiert hat. Um diese Einflüsse auszuschließen, wird erfindungsgemäß die komplexwertige Transmissionsfunktion des Messguts in die Zeitbereichsfunktion transformiert. In der Zeitbereichsfunktion sind die durch Reflexion entstandenen Signale dem eigentlichen Messsignal nicht länger überlagert, sondern treten aufgrund ihrer größeren Laufzeit zwischen Mikrowellensender und -empfänger später als das eigentliche Messsignal in der Zeitbereichsfunktion auf. Indem bei der Analyse der Zeitbereichsfunktion auf den Hauptpuls der Zeitbereichsfunktion abgestellt wird, werden störende Einflüsse auf das Messsignal unterdrückt. Das Auftreten des Hauptpulses der Zeitbereichsfunktion liefert einen sehr zuverlässigen Ausgangswert für eine spätere Auswertung der Messsignale, die dann zu einem Feuchte- und/oder Dichtewert für das Messgut führt. Die Messsignale werden dann in an sich bekannter Weise ausgewertet, indem beispielsweise die Kenngröße A für die Laufzeitverzögerung des Signals durch das Messgut und die Kenngröße B für die Breite des Hauptpulses oder die Kenngröße H für den Amplitudenwert des Hauptpulses ausgewertet werden. Sowohl die Kenngröße B als auch die Kenngröße H sind dabei ein Maß für den Imaginärteil der komplexen Brechzahl und die Dicke des Messguts, während die Kenngröße A als Maß für den Realteil der komplexen Brechzahl und die Dicke des Messguts ausgewertet werden kann. Aus der Kenngröße A und mindestens einer weiteren Kenngröße B oder H wird dichteunabhängig die Feuchte des Messguts und/oder feuchteunabhängig die Dichte des Messguts bestimmt. Ein besonderer Vorteil des erfindungsgemäßen Verfahrens liegt darin, dass die gewonnenen Kenngrößen unabhängig von der genauen Position oder der genauen Ausrichtung des Messguts in der Messanordnung zwischen Mikrowellensender und Mikrowellenempfänger sind. Ein weiterer besonderer Vorteil des erfindungsgemäßen Verfahrens besteht darin, dass die so gemessene Feuchte auch unabhängig von der Dicke des Messguts ist.

In einer bevorzugten Ausgestaltung des erfindungsgemäßen Verfahrens werden in einem Messvorgang ohne Messgut zwischen Mikrowellensender und Mikrowellenempfänger für eine Anzahl von Frequenzen die Phase und die Amplitude der von dem Mikrowellensender gesendeten und vom Mikrowellenempfänger empfangenen Mikrowellenstrahlung bestimmt und daraus die komplexwertige Übertragungsfunktion der Messanordnung ermittelt und in der Auswerteeinheit abgelegt. In diesem Messvorgang kann für eine oder mehrere nachfolgende Messungen mit Messgut bestimmt werden, welche Übertragungseigenschaften die reine Messanordnung hat. Eventuelle Änderungen der Messanordnung, die beispielsweise durch Änderung der Umgebungsbedingungen oder durch Stöße gegen Sender oder Empfänger vor der Messung erfolgt der Übertragungsfunktion der Messanordnung sind, können auf diese Weise kompensiert werden und haben keinen Einfluss auf die Messergebnisse.

Es bestehen unterschiedliche Ansätze, um die komplexwertige Zeitbereichsfunktion auszuwerten, insbesondere um den Zeitpunkt zu bestimmen, in dem der Betrag des Hauptpulses seinen Maximalwert besitzt. In einer bevorzugten Ausgestaltung der Erfindung wird der Betrag der komplexwertigen Zeitbereichsfunktion ausgewertet. Alternativ ist es auch möglich, den Realanteil und/oder den Imaginärteil der komplexwertigen Zeitbereichsfunktion bei der Bestimmung der Kenngrößen zu verwenden.

In einer zweckmäßigen Weiterführung des erfindungsgemäßen Verfahrens werden die Frequenzen bei dem Messvorgang aus einem Frequenzintervall ausgewählt, das eine niedrigste Frequenz $f_{Start}$ und eine höchste Frequenz $f_{Stop}$ besitzt. Ein bevorzugtes Frequenzintervall beträgt 500 kHz bis 50 GHz. Bevorzugt wird sowohl bei der Bestimmung der Übertragungsfunktion der Messanordnung als auch bei der Übertragungsfunktion des Messguts mit Frequenzen aus dem gleichen Frequenzintervall gearbeitet.

In einer besonders bevorzugten Ausgestaltung des erfindungsgemäßen Verfahrens wird die Kenngröße B abhängig vom Amplitudenwert H unter Berücksichtigung der unteren Frequenz $f_{Start}$ und der oberen Frequenz $f_{Stop}$ des Frequenzintervalls berechnet. Da der Messvorgang stets für ein endliches Frequenzintervall durchgeführt wird, ist zweckmäßigerweise das Frequenzintervall der Transmissionsfunktion bei der Auswertung im Zeitbereich zu berücksichtigen. Um einen Einfluss der Frequenzintervallbegrenzung auf die Kenngröße B und H zu vermeiden, werden die Größen B und H in Beziehung zueinander gesetzt und so bevorzugt die Kenngröße B aus der Kenngröße H unter Berücksichtigung des endlichen Frequenzintervalls bestimmt. Alternativ ist es auch möglich, unter Berücksichtigung des endlichen Frequenzintervalls die Kenngröße H aus der Kenngröße B zu bestimmen.

In einer bevorzugten Weiterführung des erfindungsgemäßen Verfahrens wird die Kenngröße B als Kehrwert des Amplitudenwerts H bestimmt.

Für die Feuchte des Messguts wird ein Feuchtewert $\phi$ bestimmt, der von mindestens zwei Kenngrößen abhängt. Bevorzugt wird der Feuchtewert $\phi$ als ein dichteunabhängiger Wert angesetzt, indem dieser abhängig vom Quotienten der Kenngrößen A und B definiert wird. Alternativ kann der Feuchtewert $\phi$ in seinem Wertebereich auch durch die Anwendung der Arcus-Tangens-Funktion in seinem Wertebereich begrenzt werden.

Mit dem erfindungsgemäßen Verfahren kann neben der Feuchte auch die Flächendichte bzw. die Dichte des Messguts abhängig von dem Feuchtewert $\phi$ und den Kenngrößen A und B bestimmt werden. Bevorzugt hängt die Flächendichte, vom Produkt des Feuchtewerts und der Kenngröße A ab, wobei zweckmäßigerweise zu dem Feuchtewert $\phi$ vor der Multiplikation mit der Kenngröße A noch eine Konstante addiert werden kann.

In einer weiteren bevorzugten Ausgestaltung können der Realteil und der Imaginärteil der komplexen Brechzahl des Messguts aus den Kenngrößen A und B bestimmt werden. Bevorzugt ergibt sich der um 1 reduzierte Realteil des Messguts, indem die Kenngröße A durch die Ausdehnung des Messguts in Propagationsrichtung der Mikrowelle dividiert wird und der Imaginärteil des Messguts, indem die Kenngröße B durch die Ausdehnung des Messguts in Propagationsrichtung der Mikrowelle dividiert wird.

In einer weiteren bevorzugten Ausgestaltung kann eine Flächendichte d des Messguts abhängig von dem Feuchtewert $\phi$ und den Kenngrößen A oder B bestimmt werden. Ein mittlerer Dichtewert d ergibt sich bevorzugt, indem die Flächendichte d durch die Ausdehnung des Messguts in Propagationsrichtung der Mikrowellen dividiert wird.

In einer bevorzugten Weiterführung des erfindungsgemäßen Verfahrens erfolgt die Bestimmung von Feuchte, Flächendichte und/oder Dichte abhängig von mindestens einer gemessenen Temperatur. Bei den gemessenen Temperaturen kann es sich um eine Temperatur des Messguts, eine Temperatur der Messanordnung und/oder um eine Umgebungstemperatur handeln. Die Erfassung der Temperatur erlaubt, die gemessenen Kenngrößen abhängig von der Temperatur auszuwerten, wobei eine Auswertung auch mit mehreren gemessenen Temperaturwerten erfolgen kann. Das Ergebnis der Auswertung ist dann unabhängig von der Temperatur.

In einer bevorzugten Ausgestaltung des erfindungsgemäßen Messverfahrens strahlt der Mikrowellensender polarisierte Mikrowellenstrahlung ab. In einer möglichen Ausgestaltung wird zirkular polarisierte Mikrowellenstrahlung abgestrahlt.

In einer alternativen Ausgestaltung wird linear polarisierte Mikrowellenstrahlung von dem Mikrowellensender abgestrahlt, wobei der Messvorgang für jedes Messgut mehrfach mit jeweils unterschiedlicher Polarisationsrichtung wiederholt wird. Bei jeder Wiederholung wird die Polarisationsrichtung gegenüber den bereits verwendeten Polarisationsrichtungen verändert. Eine Auswertung der Messvorgänge mit unterschiedlichen Polarisationswinkeln erfolgt in der Art, dass die Auswertung für den Polarisationswinkel erfolgt, bei dem die Kenngröße B einen minimalen Wert annimmt.

In einer bevorzugten Ausgestaltung wird das Messgut zwischen Mikrowellensender und Mikrowellenempfänger bewegt, insbesondere erfolgt die Bewegung während des Messvorgangs quer zur Ausbreitungsrichtung der Mikrowellenstrahlung.

Die erfindungsgemäße Aufgabe wird ebenfalls durch eine Vorrichtung zur Feuchte- und/oder Dichtemessung an einem Messgut gemäß Anspruch 11 gelöst. Die erfindungsgemäße Vorrichtung besitzt einen Mikrowellensender, einen Mikrowellenempfänger und eine Auswerteeinheit. Die Auswerteeinheit kann für von dem Mikrowellenempfänger empfangene Mikrowellenstrahlung, die von dem Mikrowellensender abgestrahlt wurde, die Phase und die Amplitude bestimmen, wobei die Bestimmung bevorzugt relativ zu der abgestrahlten Mikrowelle erfolgt. Ferner kann die Auswerteeinheit eine komplexwertige Übertragungsfunktion der Messanordnung speichern. Die erfindungsgemäße Vorrichtung besitzt eine Auswerteeinheit, die durch das Messgut transmittierte Mikrowellenstrahlung auswertet und eine komplexwertige Transmissionsfunktion des Messguts unter Berück sichtigung der komplexwertigen Übertragungsfunktion der Messanordnung berechnet. Die Auswerteeinheit besitzt ferner Mittel, um die komplexwertige Transmissionsfunktion in den Zeitbereich zu transformieren. Die transformierte Transmissionsfunktion sei die Zeitbereichsfunktion. Der Hauptpuls der Zeitbereichsfunktion wird ebenfalls von der Auswerteeinheit ausgewertet. Die Auswerteeinheit besitzt ferner Mittel, um den Zeitpunkt A, für den der Hauptpuls der Zeitbereichsfunktion ein Maximum annimmt und die Breite B und/oder den Amplitudenwert H des Hauptpulses der Zeitbereichsfunktion als Kenngrößen für die Bestimmung der Feuchte und/oder Dichte zu ermitteln. Ferner ist eine Kenngrößenauswerteeinheit vorgesehen, die aus den Kenngrößen A und mindestens einer der Kenngrößen B und H einen Feuchte- und/oder Dichtewert für das Messgut bestimmen kann.

Die erfindungsgemäße Vorrichtung besitzt eine Auswerteeinheit, die die ausgewerteten Signale zunächst im Frequenzbereich verarbeitet, um eine komplexwertige Transmissionsfunktion für das Messgut zu ermitteln. Die Auswerteeinheit besitzt ferner Mittel, um die komplexwertige Transmissionsfunktion in eine komplexwertige Zeitbereichsfunktion zu transformieren und für das Auftreten des Hauptpulses der komplexwertigen Zeitbereichsfunktion die Kenngrößen A sowie die Kenngrößen B und/oder H zu bestimmen. Die erfindungsgemäße vorgesehene Kenngrößenauswerteeinheit, die auch Bestandteil der Auswerteeinheit sein kann, bestimmt dann aus den Kenngrößen einen Feuchte- und/oder Dichtewert für das Messgut.

In einer bevorzugten Ausgestaltung ist zwischen dem Mikrowellenempfänger und dem Mikrowellensender eine Fördereinrichtung für das Messgut vorgesehen. Die Fördereinrichtung erlaubt es, kontinuierlich zu messendes Messgut durch die Transmissionsstrecke zwischen Mikrowellenempfänger und Mikrowellensender zu transportieren und so kontinuierlich und fortlaufend Feuchte- und /oder Dichtewerte für das Messgut zu bestimmen.

In einer bevorzugten Ausgestaltung ist die Vorrichtung mindestens mit einer Temperaturmesseinrichtung ausgestattet, um die Temperatur des Messguts, der Messanordnung und/oder eine Temperatur der Umgebung zu erfassen. Die Temperaturerfassung kann mit der Temperaturmesseinrichtung für die drei Temperaturwerte oder für weniger Temperaturwerte erfolgen.

Ein bevorzugtes Ausführungsbeispiel der Erfindung wird nachfolgend anhand der Figuren erläutert:

Es zeigen:

Fig. 1 einen Aufbau der Transmissionsstrecke mit und ohne Messgut zwischen Sender und Empfänger,

Fig. 2 den Absolutbetrag der komplexwertigen Zeitbereichsfunktion,

Fig. 3 den Aufbau für eine Transmissionsmessung unter Verwendung einer reflektierenden Platte,

Fig. 4 den Aufbau der Messanordnung bei gegenüberliegenden Mikrowellensender und -empfänger,

Fig. 5 eine dreidimensionale Darstellung des Aufbaus gemäß Fig. 4,

Fig. 6 die Abhängigkeit der Feuchte von einem gemessenen Feuchtewert bei einem Tabakballen und

Fig. 7 die Abhängigkeit der Kenngrößen A und B von der Dicke bei Pressspanplatten.

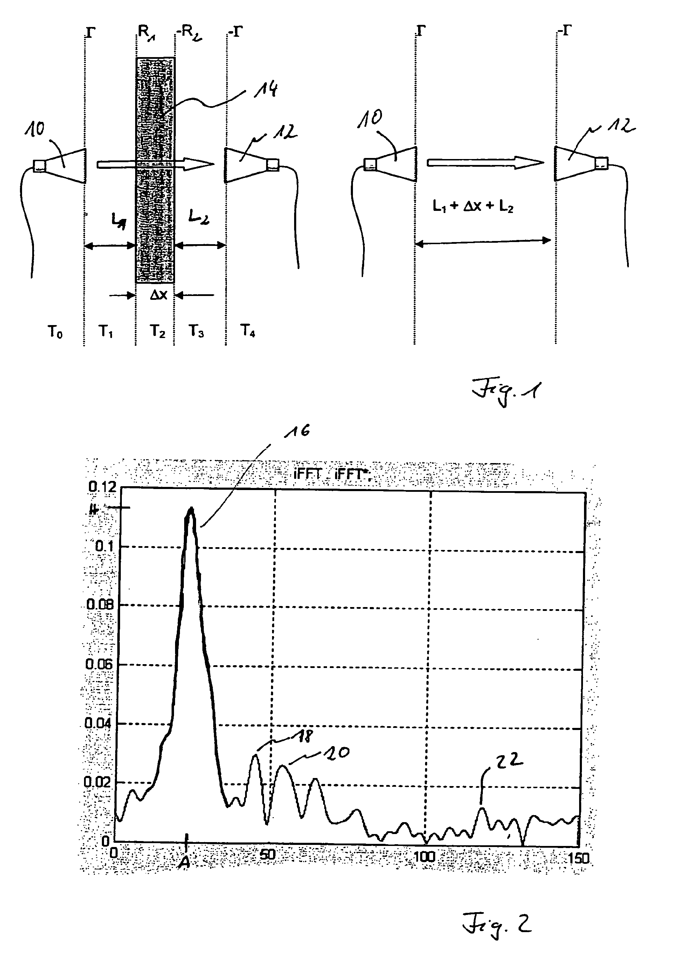

Figur 1 zeigt auf der linken Seite einen Mikrowellensender 10 und einen darauf ausgerichteten Mikrowellenempfänger 12, der die abgestrahlten Mikrowellen des Mikrowellensenders empfangen kann. Auf der Übertragungsstrecke zwischen dem Mikrowellensender 10 und dem Mikrowellenempfänger 12 ist, schematisch dargestellt, ein Messgut 14 angeordnet. Der Abstand zwischen Mikrowellensender und Mikrowellenempfänger setzt sich zusammen aus den Strecken $L_1$, Ox und $L_2$. Der rechte Teil von Figur 1 zeigt den Aufbau, bei dem kein Messgut zwischen dem Mikrowellensender 10 und dem Mikrowellenempfänger 12 angeordnet ist. Die Übertragungsstrecke besitzt hierbei die Länge $L_1$ + $\square$x + $L_2$.

Für ein besseres Verständnis der Übertragungseigenschaften der Messstrecke von Mikrowellenstrahlung zwischen dem Mikrowellensender 10 und dem Mikrowellenempfänger 12 kann die Übertragungsstrecke durch vier Grenzflächen mit den folgenden Reflexivitäten unterteilt werden, wie sie im linken Teil von Figur 1 eingezeichnet sind: $\Gamma$, $R_1$, - $R_2$ und -$\Gamma$. Insgesamt ergeben sich hier aus den Grenzflächen fünf Bereiche, denen jeweils eine der Übertragungsfunktionen $T_0$, $T_1$, $T_2$, $T_3$ und $T_4$ zugeordnet werden kann. Die einzelnen Übertragungsfunktionen sind auf der linken Seite von Figur 1 den einzelnen Bereichen der Übertragungstrecke zugeordnet. Für die Übertragungsfunktion T der gesamten Messstrecke ergibt sich bei einer Betrachtung der einzelnen Bereiche näherungsweise der folgende Ausdruck:

$$T = T_0 \cdot \left(1 - \Gamma\right) e^{-i \cdot k_0 \cdot L_1} \cdot \left(1 - R_1\right) \cdot e^{-i \cdot k_0 \cdot (n - i \cdot k) \Delta x} \cdot \left(1 + R_2\right) \cdot e^{-i \cdot k_0 \cdot L_2} \cdot \left(1 + \Gamma\right) \cdot T_4$$

Hierbei stehen $\Gamma$, $R_1$, $R_2$ für die Reflexivität an den Übergängen zwischen den Bereichsgrenzen, wie sie am linken Teil von Figur 1 eingezeichnet sind, wobei

$$k_0 = \frac{2 \cdot \pi \cdot f}{c_0}$$

die Wellenzahl bezeichnet, mit der Frequenz f und der Vakuumlichtgeschwindigkeit $c_0$, dem Realteil n und dem Imaginärteil k der komplexen Brechzahl n-ik. $T_0$ und $T_4$ sind nicht weiter spezifizierte Übertragungsfunktionen aus den Bereichen vor bzw. hinter dem Mikrowellensender/-empfänger 10 und 12.

Betrachtet man mit dem gleichen Ansatz die leere Messanordnung ohne Messgut in der Übertragungsstrecke, so ergibt sich die Übertragungsfunktion der Messanordnung $T_{leer}$ näherungsweise zu:

$$T_{leer} = T_0 \cdot (1 - \Gamma) \cdot e^{-i \cdot k_0 \cdot (L_1 + \Delta x + L_2)} \cdot (1 + \Gamma) \cdot T_4$$

Bei einer Division der Übertragungsfunktion T durch die Übertragungsfunktion der Messanordnung $T_{leer}$ ergibt sich der folgende Ausdruck, der eine Nährung der Transmissionsfunktion des Messguts darstellt:

$$\frac{T}{T_{leer}} = (1 - R_1) \cdot (1 + R_2) \cdot e^{-i \cdot k_0 \cdot ((n-1) - i \cdot k) \Delta x}$$

Aus dem Ausdruck ist deutlich zu erkennen, dass dieser nur noch von Parametern des Messguts, nämlich $R_1$, $R_2$, n, k und $\square$x abhängt, wobei $\square$x die Länge der transmittierten Strecke in dem Messgut bezeichnet, also dessen Dicke. Alle Eigenschaften, die sich aufgrund der Messanordnung ergeben, sind bei dieser Betrachtungsweise in der Frequenzdarstellung entfallen. Das heißt, aus der Transmissionsfunktion des Messguts fällt die Abhängigkeit von den Größen $L_1$ und $L_2$ heraus. Ferner fallen die Reflexivitäten $\Gamma$ von Mikrowellensender oder -empfänger heraus. Die nicht weiter bestimmten Transmissionsfunktionen $T_0$ und $T_4$ heben sich ebenfalls aus dem Ausdruck heraus, so dass eine lediglich vom Messgut abhängige Darstellung der Transmissionsfunktion vorliegt.

Hierbei handelt es sich um eine Betrachtungsweise der Übertragungsverhältnisse in erster Ordnung, die auch in zweiter Ordnung fortgeführt werden kann. In zweiter Ordnung wird die Strahlung berücksichtigt, die zwischen dem Messgut und den Aperturflächen der Antenne hin- und herläuft und mit der übrigen Strahlung interferiert. Bei einer Nährung in zweiter Ordnung ergibt sich die folgende Transmissionsfunktion für das Messgut:

$$\frac{T'}{T_{leer}} = \frac{T}{T_{leer}} \cdot \left(1 - \Gamma \cdot R_1 \cdot e^{-2i \cdot k_0 \cdot L_1} - \Gamma \cdot R_2 \cdot e^{-2i \cdot k_0 \cdot L_2} - \Gamma^2 e^{-2i \cdot k_0 \cdot (L_1 + \Delta x + L_2)}\right),$$

wobei der Ausdruck $T/T_{leer}$ dem Ausdruck von oben entspricht. An dem Ausdruck ist deutlich zu erkennen, dass eine Abhängigkeit von den Termen $L_1$, $L_2$ und $\Gamma$ vorliegt. Aus der Betrachtung in zweiter Ordnung wird bereits deutlich, dass das Ergebnis eine starke Abhängigkeit von der Wellenzahl, also der Frequenz und von der Abstandsänderung innerhalb der Messanordnung besitzt. Jeder der zusätzlichen Terme wird mit dem eigentlich zu messenden Term $T/T_{leer}$ multipliziert und hängt von unbekannten Größen ab. Diese Terme sind also nicht ohne zusätzliche Annahmen oder Verfahren herauszurechnen, insbesondere der letzte Term, der nur von Größen abhängt, die nicht zum Messgut gehören. Im Stand der Technik wurde bisher versucht, den obigen Störterm zu unterdrücken, indem über die Frequenzen und/oder die Abstände gemittelt wurde oder die Reflektivitäten $\Gamma$, $R_1$ und $R_2$ durch verschiedene Maßnahmen zu minimieren. Solche Verfahren sind beispielsweise in US 3,079,551, US 3,501,692, US 3,681,684, US 4,788,853 beschrieben. Der erfindungsgemäße Ansatz löst sich von dieser Betrachtung des Störterms und versucht nicht, diesen im Frequenzbereich herauszumitteln oder anderweitig zu unterdrücken.

Bei dem erfindungsgemäßen Ansatz wird die gemessene Transmissionsfunktion für das Messgut in den Zeitbereich transformiert und als Funktion der Zeit weiter ausgewertet.

Bei dem erfindungsgemäßen Ansatz wird die gemessene Übertragungsfunktion für das Messgut durch eine inverse Fourier-Transformation in den Zeitbereich transformiert. Die Bezeichnung Fourier-Transformation steht für die Klasse von linearen Transformationen, die die Zeitbereichsdarstellung einer Funktion in deren Frequenzbereichsdarstellung überführt. Beispielsweise kann eine Fast-Fourier-Transformation und/oder eine Sinus-Cosinus-Transformation eingesetzt werden, die jeweils die diskretere Frequenzbereichsdarstellung in die diskrete Zeitbereichsdarstellung transformiert.

Um das Ergebnis zu verdeutlichen, sei nachfolgend die Funktion T, dividiert durch $T_{leer}$, als kompexwertige Funktion $\square$im Zeitbereich betrachtet. Die Zeitbereichsfunktion $\square$ ergibt sich in erster Ordnung zu:

$$\tau_{Zeitbereich} = inv.F.(T/T_{leer}) = (1-R_1)(1+R_2)\frac{c_0/2\pi}{k \cdot \Delta x - i \cdot (t \cdot c_0 - (n-1) \cdot \Delta x)}$$

Betrachtet man den Betrag der Funktion □, so ergibt sich folgende Darstellung:

$$|\tau_{Zeitbereich}| = (1-R_1)(1+R_2)\frac{c_0/2\pi}{\sqrt{(k \cdot \Delta x)^2 + (t \cdot c_0 - (n-1) \cdot \Delta x)^2}}$$

Deutlich zu erkennen ist anhand der Formel, dass die Zeitbereichsfunktion □ ein Maximum besitzt, das. ist für den Zeitpunkt t = A mit

$$A = \frac{(n-1) \cdot \Delta x}{c_0}$$

erreicht wird. Deutlich zu erkennen ist ebenfalls, dass der Zeitpunkt A des Maximums der Zeitbereichsfunktion lediglich von den Materialgrößen n und Ox abhängt.
Der Maximalwert der Amplitude H in der Zeitbereichsfunktion ergibt sich zu:

$$H = \frac{c_0}{2\pi \cdot k \cdot \Delta x}$$

Deutlich zu erkennen ist, dass die Größe H wiederum nur abhängt von dem Imaginärteil der Brechzahl k und der Dicke des Messguts □x.
Das Produkt aus dem Imaginärteil k der komplexwertigen Brechzahl und der Dicke $\Delta x$ des Messguts kann auch aus der Halbwertsbreite des Hauptpulses der Zeitbereichsfunktion bestimmt werden. Ausgehend von der Zeitbereichsfunktion ergibt sich die Halbwertsbreite eines Hauptpulses zu

$$B = 2 \cdot \sqrt{3} \cdot k \cdot \Delta x$$

Die Größe B kann also entweder aus der Halbwertsbreite des Hauptpulses bestimmt oder aus der Kenngröße H berechnet werden.

$$B = \frac{c_0}{H} \cdot \frac{\sqrt{3}}{\pi}$$

Figur 2 zeigt den Betrag der Zeitbereichsfunktion, wie sie bei einer Messung auftritt. Deutlich zu erkennen ist, dass nach der Transformation in den Zeitbereich sich ein scharfer deutlicher Peak 16 abzeichnet. An diesem Peak können die Kenngrößen A und H und/oder B bestimmt werden.
Berücksichtigt man nun in zweiter Ordnung die oben bereits angesprochenen Störungen, die durch Reflexionen in der Messstrecke entstehen und die stark von den Größen $L_1$, $L_2$ sowie □x abhängen, so fallen diese aus der Betrachtung der komplexwertigen Zeitbereichsfunktion heraus, da sie später als der Hauptpuls 16 auftreten. Im übrigen treten die Störungen, da sie auf einer Störung zweiter Ordnung beruhen und somit vom Produkt zweier Reflexivitäten abhängen, mit kleineren Amplitudenwerten auf, als das Hauptsignal, das sich im Hauptpuls widerspiegelt.

In Figur 2 können beispielsweise die Störsignale, die abhängig sind von $L_1$ mit 18, die von $L_2$ abhängig sind mit 20 und die Störsignale, die auf $L_1 + L_2 + $□x beruhen, mit 22 identifiziert werden.

Bei einer Betrachtung der Transmissionsfunktion des Messguts im Frequenzraum ist eine zuverlässige Trennung von Messsignal und Störsignalen überaus schwierig und erfordert eine aufwendige numerische Behandlung der Störterme. Durch die Transformation in den Zeitbereich werden Nutzsignale 16 und die diese überlagernden Störsignale 18, 20 und 22 aufgrund der unterschiedlichen Laufzeit voneinander getrennt.

Bei der Erfindung erfolgt dann eine Auswertung des Hauptnutzsignals in seinem Hauptpuls 16, wobei der Zeitpunkt A des Auftretens des Maximalwertes des Hauptpulses eine erste Kenngröße für die Feuchte- und/Dichtebestimmung liefert, da sie proportional zu dem um 1 reduzierten Realteil der Brechzahl n und der Dicke □x des Messgutes ist. Die Höhe H des Hauptpulses ist umgekehrt proportional zu dem Imaginärteil k der Brechzahl und der Dicke Ox des Messgutes.

Aufgrund des begrenzten Frequenzbandes bei der Messung erfährt der Hauptpuls eine gewisse Abweichung in seiner Höhe H und seiner Breite B gegenüber einem Puls, der sich bei einem unendlichen Frequenzband ergäbe. Der Zeitpunkt A, zu dem der Hauptpuls auftritt, wird durch den endlichen Frequenzbereich nicht verändert. Betrachtet man eine Transformation von dem Frequenzbereich in den Zeitbereich auf einem endlichen Frequenzintervall von $f_{Start}$ bis $f_{Stop}$, so ergibt sich unter Verwendung von $f_{Center} = \frac{1}{2}$ ($f_{Start}$ + $f_{Stop}$) näherungsweise der folgende Ausdruck:

$$B = \frac{1 - \dfrac{H}{H_0}}{2 \cdot \pi \cdot f_{Center}} \qquad \text{mit} \qquad f_{Center} = \frac{f_{Start} + f_{Stop}}{2}$$

$H_0$ ist eine produktspezifische Konstante, die für die Auswertung einmalig für das zu messende Produkt bestimmt wird.

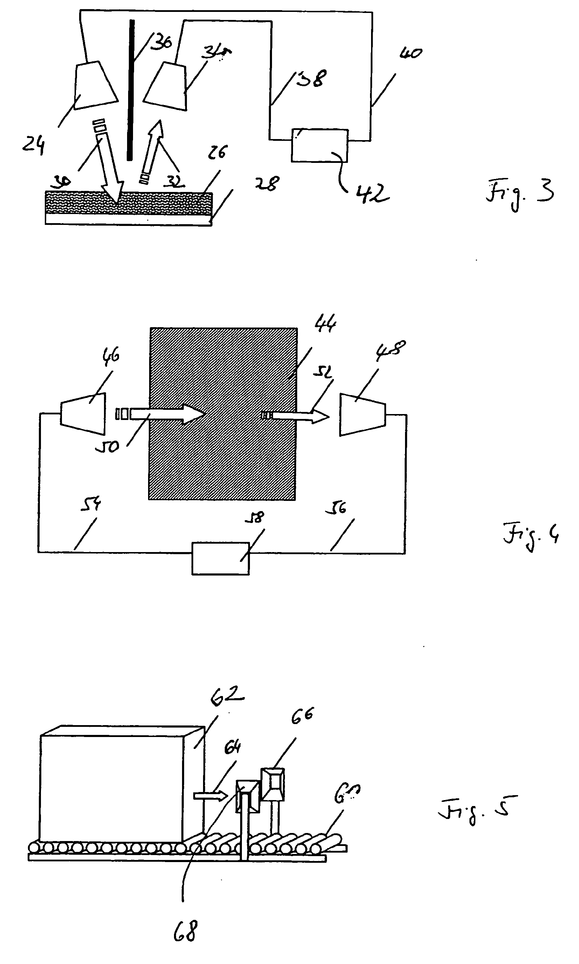

Figur 3 zeigt den schematischen Aufbau bei einer Transmissionsmessung unter Verwendung eines Reflektors. Ein Mikrowellensender 24 ist auf das Messgut 26 gerichtet, das auf einem Reflektor 28 angeordnet ist. Die vom Mikrowellensender 24 abgestrahlte Mikrowellenstrahlung 30 tritt durch das Messgut 26 hindurch auf den Reflektor 28 und wird nach erneutem Durchtritt durch das Messgut 26 als reflektierte Strahlung 32 von dem Mikrowellenempfänger 34 empfangen. Um ein direktes Übersprechen zwischen Mikrowellensender 24 und Mikrowellenempfänger 34 zu verhindern, sind diese durch eine Trennwand 36 gegeneinander abgeschirmt. Mikrowellensender 24 und Mikrowellenempfänger 34 leiten ihre Signale über ein Kabel 38 bzw. über ein Kabel 40 an einen Netzwerkanalysator 42. Der Netzwerkanalysator 42 bestimmt dann die Dämpfung der ausgesendeten Mikrowellenstrahlung 30 durch das Messgut 26. Ebenfalls bestimmt der Netzwerkanalysator die Phasenverschiebung des Mikrowellensignals 30 aufgrund des zweimaligen Durchtritts durch das Messgut 26 und gegebenenfalls aufgrund der Reflektion an dem Reflektor 28.

Figur 4 zeigt einen alternativen Aufbau, bei dem das Messgut 44 sich zwischen dem Mikrowellensender 46 und dem Mikrowellenempfänger 48 befindet. Die von dem Mikrowellensender 46 ausgestrahlte Mikrowellenstrahlung 50 wird unter Veränderung von Phase und Amplitude durch das Messgut 44 transmittiert und trifft auf den Mikrowellenempfänger 48. Zur Analyse der Dämpfung und der Phasenverschiebung sind Mikrowellensender und Mikrowellenempfänger über zwei Kabel 54 und 56 mit einem Netzwerkanalysator 58 verbunden.

Figur 5 zeigt einen Ausschnitt einer bevorzugten Ausgestaltung des Messaufbaus. Entlang einer Förderstrecke 60 wird das Messgut 62 in Richtung 64 zwischen Mikrowellensender 60 und Mikrowellenempfänger 68 bewegt. Die zugehörige Auswerteeinheit ist in Figur 5 nicht dargestellt.

Ausgehend von den Kenngrößen A sowie B wird ein dichteunabhängiger Feuchtewert und/oder ein feuchteunabhängiger Dichtewert bestimmt. Nachfolgend sei zuerst die Bestimmung des dichteunabhängigen Feuchtewerts dargestellt:

Die Auswertung der Kenngrößen zur Bestimmung der Feuchte im Produkt erfolgt nach einem an sich bekannten Verfahren, wie es beispielsweise auch in der Resonatortechnik eingesetzt wird.

Zur Kalibration werden Proben unterschiedlicher Feuchte mit dem erfindungsgemäßen Verfahren vermessen und jeweils die Kenngrößen A und B bei bekannter Feuchte des Produkts bestimmt. Wenn nachfolgend von der Kenngröße B gesprochen wird, kann stets auch die Kenngröße H verwendet werden, wenn diese entsprechend in die Kenngröße B umgerechnet wurde. Der Feuchtewert

$$\phi = \frac{B}{A}$$

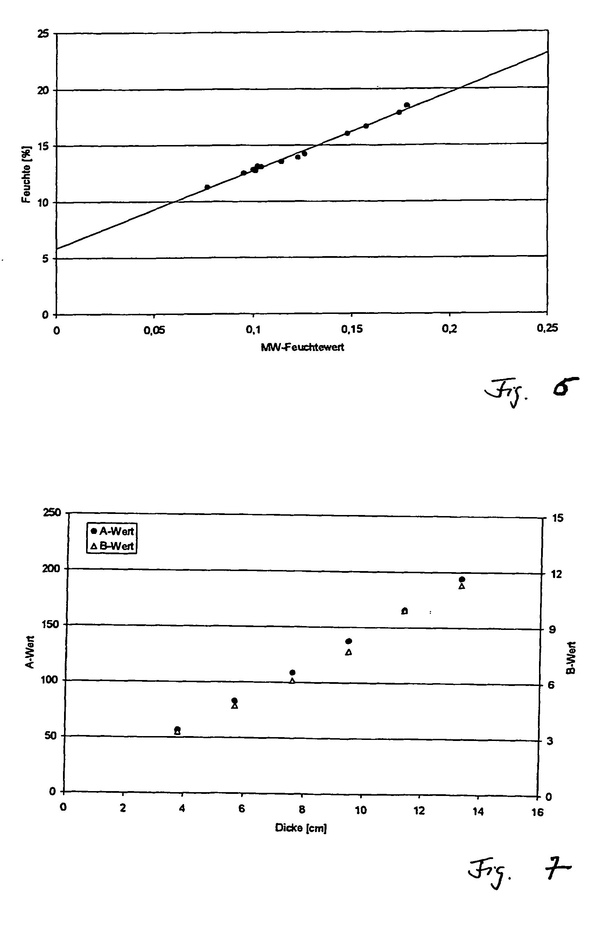

wird für die gemessenen Kenngrößen jeweils mit der Feuchte des Produktes, welche mit Hilfe eines Referenzverfahrens bestimmt wurde, verglichen. In Fig. 7 ist deutlich zu erkennen, dass jeweils der A-Wert und der B-Wert proportional zur Dicke des Messguts ist. Der Feuchtewert $\phi$, wie vorstehend definiert, ist daher unabhängig von der Dicke des Messguts. Weitere Messungen haben gezeigt, dass Analoges auch bezüglich der Dichte des Messguts gilt. Der Feuchtewert $\phi$ ist also unabhängig von der Dichte und der Dicke des Messguts.

Durch eine Kurvenanpassung wird eine Kalibrationsbeziehung ermittelt und beispielsweise in der Auswerteeinheit abgelegt. Diese Kalibrationsbeziehung kann allgemein die Form besitzen:

$$Feuchte = f(\phi)$$

wobei f eine produktabhängige, mindestens stückweise stetige Funktion ist. Im einfachsten Fall besteht zwischen der Feuchte und dem Feuchtewert $\phi$ eine lineare Beziehung:

$$Feuchte = \alpha \cdot \phi + \beta \,,$$

wobei die reellwertigen Kalibrationsparameter $\alpha$ und $\beta$ sich beispielsweise durch lineare Regression der Feuchtewerte und der Referenzfeuchtwerte bestimmen lassen.

Figur 6 zeigt eine solche lineare Regression der gemessenen Feuchtewerte $\phi$, als MW-Feuchtewerte bezeich-net, gegenüber der Referenzfeuchte. Deutlich zu erkennen ist, dass über einen weiten Bereich der MW-Feuchtewerte ein linearer Zusammenhang zu der Referenzfeuchte besteht.

In einer weiteren Kalibrationsphase kann auch die Flächendichte g bestimmt werden. Die Flächendichte g ist definiert als die Masse des Messguts, bezogen auf eine Flächeneinheit einer Ebene, welche senkrecht zur Propagationsrichtung der Mikrowelle steht. Die Flächendichte wird jeweils mit dem gemessenen Feuchtewert $\phi$, den entspre-chenden A-Werten und den entsprechenden B-Werten verglichen. Durch eine Kurvenanpassung wird eine Kalibrationsbeziehung für die Flächendichte ermittelt. Diese Kalibrationsbeziehung für die Flächendichte hat allgemein folgende Form:

$$Flächendichte = g(A, B, \phi)$$

wobei g eine produktabhängige, aber feuchteunabhängige Funktion ist. Vergleichsmessungen haben gezeigt, dass zwischen der Flächendichte, dem Feuchtewert $\phi$ und dem A-Wert im einfachsten Fall folgender linearer Zusammenhang besteht:

$$Flächendichte = \gamma \cdot \phi \cdot A + \delta \cdot A + \varepsilon \,,$$

wobei sich die reellwertigen Kalibrationsparameter $\gamma\delta\varepsilon$ beispielsweise durch lineare Regression der Feuchtewerte $\phi$ und der A-Werte an den Referenz-Flächendichten gewinnen lassen.

In Figur 7 sind die A- und die B-Werte für eine Feuchte über der Dicke aufgetragen. Es ist deutlich zu erkennen, dass hier jeweils ein linearer Zusammenhang zur Dicke des Messguts besteht, so dass sich hieraus die Flächendichte berechnen läßt.

Ist die Ausdehnung des Messguts in Propagationsrichtung bekannt, beispielsweise weil sie konstant vorgegeben wird, oder weil sie durch ein unabhängiges Verfahren zusätzlich gemessen wird, so lässt sich aus der gemessenen Flächendichte die mittlere Dichte des gesamten Messguts bestimmen. Insbesondere lässt sich dann aus dem A- und dem B-Wert auch sowohl der Realteil n als auch der Imaginärteil k der komplexen Brechzahl bestimmen Ist die Dichte des Messguts bekannt, so lässt sich ebenfalls aus der gemessenen Flächendichte die Dicke des Messguts bestimmen.

Die gemessenen Kenngrößen A, B und H sind allgemein temperaturabhängig. Verschiedene Vergleichsuntersuchungen haben gezeigt, dass die Abhängigkeit von verschiedenen Temperaturen $Te_1$, $Te_2$, $Te_3$,... linear angenähert werden kann. Beispielsweise kann die Feuchte abhängig von der Temperatur dargestellt werden als:

$$Feuchte = \left( \alpha_0 + \sum_i \alpha_i \cdot Te_i \right) \cdot \phi + \beta_0 + \sum_i \beta_i \cdot Te_i$$

wobei $\alpha_i$, $\beta_i$ temperaturunabhängige reellwertige Koeffizienten sind und $\{Te_i\}$ unterschiedliche Temperaturen bezeichnet.

Die Temperaturabhängigkeit der Flächendichte kann analog zu dem Ansatz für die Feuchtebestimmung, wie folgt bestimmt werden:

$$Fl\ddot{a}chendichte = \left( \lambda_0 + \sum_i \lambda_i \cdot Te_i \right) \cdot \phi \cdot A + \left( \delta_0 + \sum_i \delta_i \cdot Te_i \right) \cdot A + \varepsilon_0 + \sum_i \varepsilon_i \cdot Te_i \,,$$

wobei die Koeffizienten $\{\lambda_i, \delta_i, \varepsilon_i\}$ temperaturunabhängige Koeffizienten sind. Als unterschiedliche Temperaturen können beispielsweise die Temperatur des Messguts, die Umgebungstemperatur oder die Temperatur des Messgeräts erfasst werden.

Versuche an geschichtet aufgebauten Messgütem haben ergeben, dass die Messwerte A und B bei der Verwendung von zirkular polarisierter elektromagnetischer Strahlung unabhängig von der räumlichen Orientierung der Materialschichten sind, wenn die Mikrowellenstrahlung schräg auf die Schichten fällt. Geschichtet aufgebaute Messgüter können unabhängig von ihrer Orientierung vermessen werden, wenn zirkular polarisierte elektromagnetische Strahlung eingesetzt wird.

Bei der Verwendung von linear polarisierter elektromagnetischer Strahlung können an geschichtet aufgebauten Messgütem dichteunabhängige Feuchtewerte oder feuchteunabhängige Werte für die Flächendichte bestimmt werden, wenn bei einem zweiten Messvorgang die Richtung der Polarisation der Mikrowellenstrahlung gegenüber der Richtung im ersten Messvorgang um 90° gedreht wird oder wenn die Propagationsrichtung der Mikrowelle senkrecht auf den Materialschichten steht.

Alternativ kann der Messvorgang auch mehrfach mit unterschiedlicher Polarisationsrichtung wiederholt werden, wobei die Richtung der Polarisation der elektromagnetischen Strahlung gegenüber dem vorherigen Messvorgang jeweils um einen Winkel geändert wird. Durch Interpolation können von den so bestimmten Kenngrößen, die abhängig von der Polarisationsrichtung sind, derjenige Polarisationswinkel bestimmt werden, bei dem der B-Wert seinen Minimalwert oder alternativ seinen Maximalwert besitzt. Für diesen Polarisationswinkel kann die Messung wiederholt werden und die entsprechend gewonnenen Kenngrößen, wie vorstehend beschrieben, ausgewertet werden.

Für ein ausgedehntes Messgut, wie beispielsweise einen Karton oder einen Ballen kann ein Feuchtewert oder ein mittlerer Wert für die Flächendichte oder die Dichte des Messguts entlang dem Profil des Messguts gemessen werden. Dazu wird das Messgut durch die Messstrecke gefahren oder der Messaufbau mit Mikrowellensender und -empfänger entlang dem Messgut bewegt.

Das erfindungsgemäße Messverfahren zeichnet sich in einer Reihe von Merkmalen gegenüber bekannten Transmissionsverfahren aus. Zunächst handelt es sich um ein zweiparametriges Messverfahren, bei dem zwei Kenngrößen A und B zur weiteren Auswertung bestimmt werden. Hierbei kann auf eine Wiegung des Produkts oder eine Dickenmessung des Messguts verzichtet werden. Das erfindungsgemäße Verfahren eignet sich besonders gut zur berührungslosen dichte- und dickeunabhängigen Feuchtemessung. Ein wichtiger Aspekt hierbei ist, die Messung im Frequenzbereich durchzuführen und nach einer ersten Auswertung im Frequenzbereich, das heißt nach einer Division der aufgenommen komplexwertigen Übertragungsfunktion durch die Übertragungsfunktion der Messanordnung, um die komplexwertige Transmissionsfunktion für das Messgut zu bestimmen, in den Zeitbereich zu wechseln. Die Messung im Frequenzbereich hat den Vorteil, dass durch Division mit der komplexwertigen Übertragungsfunktion des Messaufbaus die Wirkung der leeren Antennenstrecke aus den Messdaten eliminiert wird. Die so bestimmte Transmissionsfunktion des Messguts ist also unabhängig von der Übertragungsfunktion der Antennenstrecke, also unabhängig von den verwendeten Antennen, den Kabellängen, den Abständen der Antennen zum Messgut und dergleichen. Durch die Transformation der gemessenen Transmissionsfunktion des Messguts in den Zeitbereich können die Wellenanteile, die an Sprungschichten der Brechzahl, also beispielsweise am Messgut oder an den Aperturflächen der Antenne, reflektiert werden und so einen längeren Laufweg haben, als das Nutzsignal, von dem Nutzsignal getrennt werden. In der Zeitbereichsdarstellung sind diese Signale dem Maximalwert nachlaufend und besitzen im Bereich des Hauptpulses sehr kleiner Amplituden. So hat die Position des Messguts innerhalb der Antennenstrecke und deren genaue Ausrichtung nur in geringem Maße Einfluss auf die Messergebnisse.

Die Auswertung des Hauptpulses der Zeitbereichsfunktion stellt somit sicher, dass Reflektionen und Überlagerungen aus den Signalen entfernt wurden. Durch die erfindungsgemäße Kombination in der Betrachtungsweise im Frequenz- und im Zeitbereich können sehr genaue Kenngrößen für eine dichteunabhängige Feuchtebestimmung und eine feuchtunabhängige Dichtebestimmung gefunden werden. Die Bestimmung der Messgröße B aus der Messgröße H in Abhängigkeit von der Start- und der Stopfrequenz sorgt dafür, dass der B-Wert in sehr guter Näherung proportional zur Dicke $\Delta x$ und zum Imaginärteil k der komplexen Brechzahl des Messguts ist.

## Patentansprüche

1.  Verfahren zur Feuchte- und/oder Dichtemessung in einem Messgut, mit einem Mikrowellensender, einem Mikrowellenempfänger und einer Auswerteeinheit, die für von dem Mikrowellenempfänger empfangene Mikrowellenstrahlung des Mikrowellensenders die Phase und die Amplitude bestimmen kann und in der eine komplexwertige Übertragungsfunktion der Messanordnung gespeichert werden kann, das Verfahren weist folgende Schritte auf:

    - in einem Messvorgang wird für eine Anzahl von Frequenzen die Phase und die Amplitude der durch das Messgut transmittierten Mikrowellenstrahlung bestimmt und aus den bestimmten Werten eine komplexwertige Übertragungsfunktion der Messanordnung bestimmt,
    - eine komplexwertige Transmissionsfunktion des Messguts wird durch Bildung des Verhältnisses der komplexwertigen Übertragungsfunktion der Messanordnung mit Messgut und ohne Messgut berechnet und in den Zeitbereich als komplexwertige Zeitbereichsfunktion durch inverse Fourier-Transformation transformiert,
    - aus der Zeitbereichsfunktion wird der Zeitpunkt, in dem der Betrag des Hauptpulses seinen Maximalwert besitzt, als Kenngröße A bestimmt,
    - aus der Zeitbereichsfunktion wird die Breite des Hauptpulses als Kenngröße B und/oder der Amplitudenwert des Hauptpulses als Kenngröße H bestimmt,
    - eine dichteunabhängige Feuchte und/oder eine Dichte des Messguts wird abhängig von der Kenngröße A und den Kenngrößen B und/oder H bestimmt.

2.  Verfahren nach Anspruch 1 , **dadurch gekennzeichnet, dass** bei der komplexwertigen Zeitbereichsfunktion zur Bestimmung der Kenngrößen eine oder mehrere der folgenden Größen ausgewertet wird: der Betrag, der Realteil und/oder der Imaginärteil.

3.  Verfahren nach einem der Ansprüche 1 bis odet 2, **dadurch gekennzeichnet, dass** die Kenngröße B abhängig von dem Amplitudenwert H unter Berücksichtigung einer niedrigsten Frequenz $f_{Start}$ und einer größten Frequenz $f_{Stop}$ eines Frequenzintervalls, aus dem die Frequenzen bei dem Messvorgang stammen, berechnet oder als Kehrwert des Amplitudenwerts H bestimmt wird.

4.  Verfahren nach Anspruch 1, **dadurch gekennzeichnet, dass** eine Flächendichte g des Messguts abhängig von dem Feuchtewert $\phi$ und mindestens einer der Kenngrößen A, B und H bestimmt wird.

5.  Verfahren nach Anspruch 1, **dadurch gekennzeichnet, dass** zusätzlich eine Dichte des Messguts abhängig vom Feuchtewert $\phi$, der Dicke des Messguts und mindestens einer der Kenngrößen A, B und H bestimmt wird.

6.  Verfahren nach einem der Ansprüche 1 bis 5, **dadurch gekennzeichnet, dass** die Bestimmung von mindestens einem der folgenden Werte: Feuchte, Flächendichte oder Dichte abhängig von mindestens einer gemessenen Temperatur erfolgen.

7.  Verfahren nach Anspruch 6, **dadurch gekennzeichnet, dass** eine oder mehrere der folgenden Temperaturen gemessen wird: Temperatur des Messguts, Temperatur der Messanordnung und Temperatur der Umgebung.

8. Verfahren nach einem der Ansprüche 1 bis 7, **dadurch gekennzeichnet, dass** die abgestrahlte Mikrowellenstrahlung zirkular oder linear polarisiert ist.

9. Verfahren nach Anspruch 8, **dadurch gekennzeichnet, dass** der Messvorgang für jedes Messgut mit unterschiedlicher Polarisationsrichtung mehrfach wiederholt wird, wobei bei jeder Wiederholung die Polarisationsrichtung verändert wird.

10. Verfahren nach Anspruch 9, **dadurch gekennzeichnet, dass** die Bestimmung der Kenngrößen A, B bei linear polarisierter Mikrowellenstrahlung mit einem Polarisationswinkel erfolgt, bei dem die Kenngröße B einen minimalen Wert besitzt.

11. Vorrichtung zur Feuchte- und/oder Dichtemessung in einem Messgut, mit einem Mikrowellensender, einem Mikrowellenempfänger und einer Auswerteeinheit, die für von dem Mikrowellenempfänger empfangere und von dem Mikrowellensender abgestrahlte Mikrowellenstrahlung die Phase und die Amplitude bestimmen kann und in der eine komplexwertige Übertragungsfunktion der Messanordnung abgespeichert werden kann,
**dadurch gekennzeichnet, dass** die Auswerteeinheit die von dem Messgut transmittierte Mikrowellenstrahlung auswertet und eine komplexwertige Transmissionsfunktion des Messguts durch Bildung des Verhältnisses der komplexwertigen Übertragungsfunktion der Messanordnung mit Messgut und ohne Messgut bestimmt,
die Auswerteeinheit ferner Mittel besitzt, um die komplexwertige Transmissionsfunktion in den Zeitbereich als eine Zeitbereichsfunktion durch inverse Fourier-Transformation zu transformieren und den Hauptpuls der Zeitbereichsfunktion auszuwerten,
die Auswerteeinheit ferner Mittel besitzt einen Zeitpunkt A für den Hauptpuls der Zeitbereichsfunktion als Kenngröße und die Breite B und/oder den Amplitudenwert H des Hauptpulses der Zeitbereichsfunktion als weitere Kenngröße zu bestimmen, und
eine Kenngrößenauswerteeinheit für Feuchte und/oder Dichte aufweist, die aus der Kenngröße A und mindestens einer der Kenngrößen B und H einen dichteunabhängigen Feuchtewert und/oder einen Dichtewert für das Messgut bestimmen kann.

12. Vorrichtung nach Anspruch 11, **dadurch gekennzeichnet, dass** zwischen Mikrowellenempfänger und Mikrowellensender eine Fördereinrichtung für das Messgut vorgesehen ist.

13. Vorrichtung nach Anspruch 11 oder 12, **dadurch gekennzeichnet, dass** mindestens eine Temperaturmesseinrichtung vorgesehen ist, um die Temperatur des Messguts, der Messanordnung und/oder der Umgebung zu erfassen.

## Claims

1. A method for the measurement of humidity and/or density in a measurement target, with a microwave sender, a microwave receiver and an analysing unit, which can determine the phase and the amplitude of the microwave radiation of the microwave sender received by the microwave receiver, and in which a complex-valued transfer function of the measurement arrangement can be stored, the method having the following steps:

   ● in one measurement operation, the phase and the amplitude of the microwave radiation transmitted through the measurement target is determined for a number of frequencies and a complex-valued transmission function of the measurement target is calculated from the determined values
   ● a complex-valued transmission function of the measurement target is calculated by calculating the ratio of the complex-valued transmission function of the measurement arrangement with the measurement target and without the measurement target, and transformed into the time domain as a complex-valued time domain function by inverse Fourier transformation,
   ● the point in time at which the amount of the main pulse has its maximum value is determined as a characteristic variable A from the time domain function,
   ● from the time domain function, the width of the main pulse is determined as a characteristic variable B, and/or the amplitude value of the main pulse as a characteristic variable H,
   ● a density independent humidity and/or density of the measurement target is determined depending on the characteristic variable A and the characteristic variables B and/or H.

2. A method according to claim 1, **characterised in that** for the determination of the characteristic variables one or several of the following quantities is analysed for the complex-valued time domain function, the absolute value, the real part and/or the imaginary part.

3. A method according to claim 1 or 2, **characterised in that** the characteristic variable B is calculated depending on the amplitude value H, taking into account a lowest frequency $f_{Start}$ and a greatest frequency $f_{Stop}$ of the frequency interval from which the frequencies during the measurement operation originate, or is determined as the reciprocal value of the amplitude value H.

4. A method according to claim 1, **characterised in that** a surface density g of the measurement target is determined depending on the humidity value $\phi$, and at least one of the characteristic variables A, B and H.

5. A method according to claim 1, **characterised in that** a density of the measurement target is determined in addition, depending on the humidity value $\phi$, the thickness of the measurement target and at least one of the characteristic variables A, B and H.

6. A method according to any one of claims 1 to 5, **characterised in that** the determination of at least one of the following values: humidity, surface density or density, takes place depending on at least one measured temperature.

7. A method according to claim 6, **characterised in that** one or several of the following temperatures is measured: temperature of the measurement target, temperature of the measurement arrangement, temperature of the surroundings.

8. A method according to any one of claims 1 to 7, **characterised in that** the emitted microwave radiation is polarized circularly or linearly.

9. A method according to claim 8, **characterised in that** the measurement operation is repeated plural times for each measurement target with different polarization directions, the polarization direction being changed in every repetition.

10. A method according to claim 9, **characterised in that** the determination of the characteristic variables A, B takes place at a polarization angle at which the characteristic variable B has a minimum value by the use of linear polarized microwave radiation.

11. An apparatus for the measurement of humidity and/or density in a measurement target, with a microwave sender, a microwave receiver and an analysing unit, which can determine the phase and the amplitude of microwave radiation received by the microwave receiver and emitted by the microwave sender, and in which a complex-valued transfer function of the measurement arrangement can be stored,

● **characterised in that** the analysing unit analyses the microwave radiation transmitted by the measurement target and determines a complex-valued transmission function of the measurement target by calculating the ration of the complex-valued transfer function of the measurement arrangement with the measurement target and without the measurement target,
● the analysing unit has further means for transforming the complex-valued transfer function into the time domain as a time domain function by inverse Fourier transformation, and to analyse the main pulse of the time domain function,
● the analysing unit has further means for determining a point in time A for the main pulse of the time domain function as a characteristic variable, and the width B and/or the amplitude value H of the main pulse of the time domain function as additional characteristic variable, and
● has a characteristic variable analysing unit for humidity and/or density, which can determine a density independent humidity value and/or density value for the measurement target from the characteristic variable A and at least one of the characteristic variables B and H.

12. An apparatus according to claim 11, **characterised in that** a conveying device for the measurement target is provided between microwave receiver and microwave sender.

13. An apparatus according to claim 11 or 12, **characterised in that** at least one temperature measurement device is provided in order to acquire the temperature of the measurement target, the measurement arrangement and/or of the surroundings.

**Revendications**

1. Procédé de mesure d'humidité et/ou de densité dans un produit de mesure, comprenant un émetteur micro-ondes, un récepteur micro-ondes et une unité d'évaluation, qui peut déterminer la phase et l'amplitude pour le rayonnement micro-ondes de l'émetteur micro-ondes reçu par le récepteur micro-ondes et dans laquelle une fonction de transmission à valeurs complexes de l'ensemble de mesure peut être enregistrée, le procédé comprenant les étapes suivantes :

- la phase et l'amplitude du rayonnement micro-ondes transmis à travers le produit de mesure sont déterminées dans un procédé de mesure pour un nombre de fréquences, et une fonction de transmission à valeurs complexes de l'ensemble de mesure est déterminée à partir des valeurs déterminées,
- une fonction de transmission à valeurs complexes du produit de mesure est calculée par la formation du rapport de la fonction de transmission à valeurs complexes de l'ensemble de mesure avec produit de mesure et sans produit de mesure et est transformée dans le domaine temporel en tant que fonction de domaine temporel à valeurs complexes par la transformation de Fourier inverse,
- à partir de la fonction de domaine temporel, le moment, où le niveau de l'impulsion principale présente sa valeur maximale, est déterminé en tant que grandeur caractéristique A,
- à partir de la fonction de domaine temporel, la largeur de l'impulsion principale est déterminée en tant que grandeur caractéristique B et/ou la valeur d'amplitude de l'impulsion principale est déterminée en tant que grandeur caractéristique H,
- une humidité indépendante de la densité et/ou une densité du produit de mesure est déterminée en fonction de la grandeur caractéristique A et des grandeurs caractéristiques B et/ou H.

2. Procédé selon la revendication 1, **caractérisé en ce que** dans le cas de la fonction de domaine temporel à valeurs complexes destinée à déterminer les grandeurs caractéristiques, une ou plusieurs des grandeurs suivantes sont évaluées : le niveau, la partie réelle et/ou la partie imaginaire.

3. Procédé selon une des revendications 1 ou 2, **caractérisé en ce que** la grandeur caractéristique B, en fonction de la valeur d'amplitude H en tenant compte d'une fréquence minimale $f_{start}$ et d'une fréquence maximale $f_{stop}$ d'un intervalle de fréquence d'où proviennent les fréquences lors du processus de mesure, est calculée ou déterminée comme valeur réciproque de la valeur d'amplitude H.

4. Procédé selon la revendication 1, **caractérisé en ce qu'**une densité superficielle g du produit de mesure est déterminée en fonction de la valeur d'humidité $\varnothing$ et d'au moins une des grandeurs caractéristiques A, B et H.

5. Procédé selon la revendication 1, **caractérisé en ce qu'**une densité du produit de mesure est de plus déterminée en fonction de la valeur d'humidité $\varnothing$, de l'épaisseur du produit de mesure et d'au moins une des grandeurs caractéristiques A, B et H.

6. Procédé selon une des revendications 1 à 5, **caractérisé en ce que** la détermination d'au moins une des valeurs suivantes : humidité, densité superficielle ou densité a lieu en fonction d'au moins une température mesurée.

7. Procédé selon la revendication 6, **caractérisé en ce qu'**une ou plusieurs des températures suivantes est mesurée : température du produit de mesure, température de l'ensemble de mesure et température de l'environnement.

8. Procédé selon une des revendications 1 à 7, **caractérisé en ce que** le rayonnement micro-ondes émis est polarisé circulairement ou linéairement.

9. Procédé selon la revendication 8, **caractérisé en ce que** le procédé de mesure pour chaque produit de mesure est répété plusieurs fois avec une direction de polarisation variable, la direction de polarisation étant modifiée à chaque répétition.

10. Procédé selon la revendication 9, **caractérisé en ce que** la détermination des grandeurs caractéristiques A, B pour le rayonnement micro-ondes polarisé linéairement a lieu avec un angle de polarisation dans lequel la grandeur caractéristique B possède une valeur minimale.

11. Dispositif de mesure d'humidité et/ou de densité dans un produit de mesure, comprenant un émetteur micro-ondes, un récepteur micro-ondes et une unité d'évaluation, qui peut déterminer la phase et l'amplitude pour le rayonnement micro-ondes reçu par le récepteur micro-ondes et émis par l'émetteur micro-ondes et dans laquelle une fonction de transmission à valeurs complexes de l'ensemble de mesure peut être enregistrée,

**caractérisé en ce que** l'unité d'évaluation évalue le rayonnement micro-ondes transmis par le produit de mesure et détermine une fonction de transmission à valeurs complexes du produit de mesure par la formation du rapport de la fonction de transmission à valeurs complexes de l'ensemble de mesure avec produit de mesure et sans produit de mesure,

l'unité d'évaluation comprend en outre des moyens pour transformer la fonction de transmission à valeurs complexes dans le domaine temporel en tant que fonction de domaine temporel par la transformation de Fourier inverse et évaluer l'impulsion principale de la fonction de domaine temporel,

l'unité d'évaluation possède de plus des moyens pour déterminer un moment A pour l'impulsion principale de la fonction de domaine temporel en tant que grandeur caractéristique et la largeur B et/ou la valeur d'amplitude H de l'impulsion principale de la fonction de domaine temporel en tant qu'autre grandeur caractéristique, et

présente une unité d'évaluation des grandeurs caractéristiques pour l'humidité et/ou la densité qui peut déterminer à partir de la grandeur caractéristique A et au moins une des grandeurs caractéristiques B et H une valeur d'humidité indépendante de la densité et/ou une valeur de densité pour le produit de mesure.

12. Dispositif selon la revendication 11, **caractérisé en ce qu'**un convoyeur est prévu pour le produit de mesure entre le récepteur micro-ondes et l'émetteur micro-ondes.

13. Dispositif selon la revendication 11 ou 12, **caractérisé en ce qu'**au moins une installation thermométrique est prévue pour détecter la température du produit de mesure, de l'ensemble de mesure et/ou de l'environnement.

$T_0$ $\quad$ $T_1$ $\quad$ $T_2$ $\quad$ $T_3$ $\quad$ $T_4$

Fig. 1

Fig. 2

Fig. 3

Fig. 4

Fig. 5

*Fig. 6*

*Fig. 7*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4004119 C2
- US 4727311 A
- US 5333493 A
- US 6025724 A
- US 2004023338 A1
- US 20050253595 A1
- US 4319185 A
- US 3079551 A
- US 3501692 A
- US 3681684 A
- US 4788853 A

**In der Beschreibung aufgeführte Nicht-Patentliteratur**

- **O. SCHIMMER et al.** Noncontacting determination of moisture content in bulk materials using sub-nanosecond UWB-pulses. *Microwave Theory and Techniques, IEEE Transactions,* Juni 2005
- **S.I. ELKHETALI et al.** Estimation of Electromagnetic of Libyan soil Properties by Stepped Frequency Radar. *Advanced Ground Penetrating Radar,* 01. Juni 2007, 110-113
- Principles of Ultra-Wideband Sensor Electronics. **JÜRGEN SACHS.** Electromagnetic Aquametry: Electromagnetic Wave Interaction with Water and Moist Substance. Springer-Verlag, 2004
- **E. NYFORS et al.** Industrial Microwave Sensors. ARTECH HOUSE INC,